(19) Europäisches Patentamt European Patent Office Office européen des brevets

(11) **EP 4 150 041 B1**

(12) **EUROPEAN PATENT SPECIFICATION**

(45) Date of publication and mention
of the grant of the patent:
**22.05.2024 Bulletin 2024/21**

(21) Application number: **21723778.3**

(22) Date of filing: **11.05.2021**

(51) International Patent Classification (IPC):
*C12C 11/11* (2019.01)     *C12G 3/005* (2019.01)
*C12G 3/06* (2006.01)     *B67D 1/00* (2006.01)
*C12H 3/04* (2019.01)

(52) Cooperative Patent Classification (CPC):
**C12C 11/11; B67D 1/002; C12G 3/005; C12G 3/06;
C12H 3/04**

(86) International application number:
**PCT/EP2021/062512**

(87) International publication number:
**WO 2021/228874 (18.11.2021 Gazette 2021/46)**

(54) **PROCESS OF MANUFACTURING A PACKAGED LIQUID BEER CONCENTRATE**

EINZELPORTIONSKAPSEL ZUR ZUBEREITUNG EINES BIERÄHNLICHEN GETRÄNKS

CAPSULE À USAGE UNIQUE POUR PRÉPARER UNE BOISSON DE TYPE BIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2020 EP 20175077
23.10.2020 EP 20203689**

(43) Date of publication of application:
**22.03.2023 Bulletin 2023/12**

(73) Proprietor: **Heineken Supply Chain B.V.
2382 PH Zoeterwoude (NL)**

(72) Inventors:
• **BROUWER, Eric Richard**
**2382 PH Zoeterwoude (NL)**
• **BEKKERS, Augustinus Cornelius Aldegonde
Petrus
Albert**
**2382 PH Zoeterwoude (NL)**

(74) Representative: **Nederlandsch Octrooibureau
P.O. Box 29720
2502 LS The Hague (NL)**

(56) References cited:
**EP-A1- 0 116 462      EP-A1- 3 330 216
WO-A1-2020/055233      US-A1- 2016 230 133**

• **Souci ET AL: "Alcohol free beer" In: "Food
Composition and Nutrition tables", 1 January
2015 (2015-01-01), MedPharm, XP055795387,
pages 1151-1154, the whole document**
• **D. E. Briggs ET AL: "Brewing: Science and
Practice", , 1 January 2004 (2004-01-01),
XP055435010, Retrieved from the Internet:
URL:http://fars.itvhe.ac.ir/_fars/Document
s/99ae7cc8-c9a8-4356-8d24-f6c208322cb7.pdf
[retrieved on 2017-12-13]**

**Description**

**TECHNICAL FIELD OF THE INVENTION**

The present invention relates to a process of manufacturing a packaged liquid beer concentrate, said process comprising:

- providing an alcoholic beer;
- removing at least a part of the ethanol from the alcoholic beer by means of distillation, thereby producing (i) a low alcohol beer having an ethanol content of 0-1.5% ABV alcohol and (ii) an alcoholic liquid containing at least 10% ABV ethanol;
- removing at least 70 wt.% of the water present in the low alcohol beer by means of membrane separation and/or freeze concentration to produce a liquid beer concentrate;

wherein the liquid beer concentrate and the alcoholic liquid are separately packaged within a single container or within separate containers that together form a kit of parts.

The invention also relates to a packaged liquid beer concentrate that is obtained by the aforementioned process.

**BACKGROUND OF THE INVENTION**

The popularity of domestic appliances for preparing and dispensing carbonated beverages from concentrated syrup, such as Sodastream®, has grown rapidly. These appliances produce carbonated beverages by carbonating water and mixing the carbonated water with a flavoured syrup. Given the high flexibility and convenience provided by these appliances, it would be desirable to have available beer concentrates from which beer can be produced using similar appliances.

Since beer typically contains more than 90% of water, beer can be concentrated considerably by removing most of the water. The benefits of producing beer from a concentrate have been recognized in the art. However, the production of a beer concentrate that can suitably be used to produce a good quality beer represents a challenging task.

First of all, water should be removed selectively so as to avoid loss of flavour substances, color and/or beer components that contribute to the formation and stability of foam heads. Since the removal of water from beer favours the occurrence of chemical reactions between beer components (e.g. reactions between ethanol and carboxylic acids) and precipitation of solutes (e.g. proteins, sugars), both of which can lead to quality loss during storage, ways need to be found to address these stability issues.

US 4,265,920 describes a process for the concentration of aqueous alcoholic beverage solutions, containing in addition to non-volatile components, alcohol and small amounts of volatile aroma components by the selective removal of water, comprising the following steps:

(a) a first step in which substantially all of the alcohol and the more volatile aroma components are separated by a process of distillation at strongly reduced pressure, from the bulk of the aqueous solution and in which the vapors containing alcohol and more volatile aroma components obtained by said distillation process are condensed in a condenser,
(b) a second step in which the aqueous solution obtained in step (a), is concentrated by removing water in a process of freeze concentration while retaining in the solution the aroma components remaining from step a), and
(c) a third step in which the condensate containing alcohol and more volatile aroma components obtained in step (a), is mixed with the concentrate obtained in step (b ).

WO 2016/083482 describes a method for preparing beer concentrate, comprising the steps of:

a) subjecting beer or cider (1) to a first concentration step comprising nanofiltration (A) or reverse osmosis to obtain a retentate (2) and a fraction comprising alcohol and volatile flavour components (3), wherein the retentate (2) is characterised by the concentration of unfilterable compounds equal to or higher than 20% (w/w), as calculated from density measurement corrected for the alcohol amount;
b) subjecting the fraction comprising alcohol and volatile flavour components (3) to a next concentration step (B) comprising freeze concentration, fractionation, preferably being distillation, or reverse osmosis, to obtain a concentrated fraction comprising alcohol and volatile flavour components (4) and a leftover fraction (5);
c) combining (C) the retentate (2) from a) with the concentrated fraction (4) comprising alcohol and volatile flavour components from b).

WO 2018/134285 describes a method for preparing a concentrate comprising the steps of

A) subjecting beer or cider (1) to a first concentration step to obtain a retentate (2) and a permeate (3) comprising alcohol (3a) and volatile flavour components (3b),
B) subjecting the permeate (3) to an adsorption step whereby the volatile flavour and alcohol containing permeate is passed over or through an adsorption unit,
C) recovering the flavour components (3b) from the adsorption unit in a further recuperation process
D) combining the retentate (2) with the flavour components (3b).

US 2016/230133 describes a method of preparing a concentrate from an alcoholic beverage, comprising:

- subjecting an alcoholic beverage to a membrane process by which at least some water and alcohol pass through a membrane to be part of a permeate and other components of the alcoholic beverage do not pass through the membrane and are part of a retentate;
- freezing water in the retentate to form ice; and
- removing ice from the retentate to reduce water content and form a beverage concentrate having a solids concentration of at least 30% and an alcohol concentration of 20% or less.

EP-A 3 330 216 describes an appliance for the production and dispensing of carbonated beer, wherein the appliance comprises a concentrate beverage inlet, a diluent inlet, a pressurized gas inlet, a carbonation unit having a diluent inlet and a pressurized gas inlet, a mixing unit in which the carbonated diluent and beverage concentrate are mixed and comprising gas pressure regulating means for varying the gas at the inlet of the carbonation unit.

## SUMMARY OF THE INVENTION

The inventors have developed a process for the manufacture of packaged liquid beer concentrates in which alcohol is removed from alcoholic beer by distillation and wherein the low alcohol beer so obtained is subjected to membrane separation or freeze concentration to produce a liquid beer concentrate. The alcoholic liquid that is obtained as the distillate from the distillation step and the liquid beer concentrate are packaged separately in a single container or in separate containers that together form a kit of parts.

Accordingly, the present invention relates to a process of manufacturing a packaged liquid beer concentrate, said process comprising:

- providing an alcoholic beer comprising 3-12% ABV ethanol;
- removing at least a part of the ethanol from the alcoholic beer by means of distillation, thereby producing (i) a low alcohol beer having an ethanol content of 0-1.5% ABV alcohol and (ii) an alcoholic liquid containing at least 10% ABV ethanol;
- removing at least 70 wt.% of the water present in the low alcohol beer by means of membrane separation and/or freeze concentration to produce a liquid beer concentrate, wherein the membrane separation is selected from nanofiltration, reverse osmosis and forward osmosis;
- if the alcoholic liquid contains less than 20% ABV ethanol, concentrating the alcoholic liquid to an ethanol content of at least 30% ABV by means of distillation, reverse osmosis or forwards osmosis;
- separately packaging the liquid beer concentrate and the alcoholic liquid within a single container or within separate containers that together form a kit of parts.

The membranes used in nanofiltration, reverse osmosis and forward osmosis retain virtually all components of the low alcohol beer, except for water and possibly monovalent ions and very small organic molecules. Freeze concentration removes water and virtually nothing else. Thus, both membrane separation and freeze concentration offer the advantage that components that are important to the taste, mouthfeel and stability of the beer are effectively retained in the liquid beer concentrate.

The physicochemical stability of the liquid beer concentrate obtained by the present process is very high due to the very low (or zero) ethanol content. Although the inventors do not wish to be bound by theory it is believed that the presence of appreciable levels of ethanol in a liquid beer concentrate can give rise to flavour changes due to the formation of ethyl esters (e.g. ethyl acetate) and/or to haze formation (e.g. due to precipitation of proteins and/or saccharides).

The liquid beer concentrate that is employed in accordance with the present invention additionally offers the advantage that it has a relatively high surface tension due to the virtual absence of ethanol. A high surface tension is advantageous as it reduces unwanted foaming during the filling of the beer concentrate into capsules.

The present process offers the important advantage that it can utilise de-alcoholisation units that are commonly used in the production of low alcohol beer, thus minimising capital investment. The low alcohol beer that is obtained by the dealcoholisation step can be concentrated in a single step to produce the liquid beer concentrate.

The invention further relates to packaged liquid beer concentrates that are obtained by the aforementioned process. The packaged liquid beer concentrate can take the form of a single serve capsule with at least two compartments, including a first compartment and a second compartment; wherein the first compartment comprises the liquid beer concentrate and the second compartment comprises the alcoholic liquid. The packaged liquid beer concentrate can also take the form of a kit of parts comprising a first container containing 10-1,000 mL of the liquid beer concentrate and a second container containing 4-500 mL of the alcoholic liquid.

## FIGURES

Fig.1 provides a schematic representation of a method of preparing a single-serve capsule according to the invention.

Fig.2 provides a cross-sectional view of a single-serve capsule according to the invention

Fig.3 shows a representation of a beverage preparation device that contains a single serve capsule according to the invention.

## DETAILED DESCRIPTION OF THE INVENTION

Thus, one aspect of the present invention concerns a process of manufacturing a packaged liquid beer concentrate, said process comprising:

- providing an alcoholic beer comprising 3-12% ABV ethanol;
- removing at least a part of the ethanol from the alcoholic beer by means of distillation, thereby producing (i) a low alcohol beer having an ethanol content of 0-1.5% ABV alcohol and (ii) an alcoholic liquid containing at least 10% ABV ethanol;
- removing at least 70 wt.% of the water present in the low alcohol beer by means of membrane separation and/or freeze concentration to produce a liquid beer concentrate, wherein the membrane separation is selected from nanofiltration, reverse osmosis and forward osmosis;
- if the alcoholic liquid contains less than 20% ABV ethanol, concentrating the alcoholic liquid to an ethanol content of at least 30% ABV by means of distillation, reverse osmosis or forwards osmosis;
- separately packaging the liquid beer concentrate and the alcoholic liquid within a single container or within separate containers that together form a kit of parts.

The term "beer" as used herein refers to a yeast fermented malt beverage that has optionally been hopped. Beer is commonly produced by a process that comprises the following basic steps:

- mashing a mixture comprising malted barley, optionally supplementary grains and water to produce a mash;
- separating the mash in wort and spent grains;
- boiling the wort to produce a boiled wort;
- fermenting the boiled wort with live yeast to produce a fermented wort;
- subjecting the fermented wort to one or more further process steps (e.g. maturation and filtration) to produce beer; and
- packaging the beer in a sealed container, e.g. a bottle, can or keg.

Hop or hop extract is usually added during wort boiling to impart bitterness and floral, fruity flavor notes to the final beer.

The term "beer concentrate" as used herein refers to beer from which water has been removed, e.g. by means of nanofiltration, reverse osmosis, forward osmosis and/or freeze concentration.

The term "distillation" as used herein refers to the removal of ethanol by boiling the low alcohol beer and by collecting the evaporated components after condensation. The term "distillation" encompasses vacuum distillation as well as osmotic distillation.

The term "membrane separation" as used herein refers to a separation method in which molecules are separated by passing a feed stream through a membrane that separates it into two individual streams, known as the permeate and the retentate. Examples of membrane separation include nanofiltration, reverse osmosis and forward osmosis.

The term "capsule" as used herein refers to a compartmentalized container suitable for separately holding the two liquid components according to the invention.

The term "single-serve" as used herein is a synonym of "monoportion" or "unit dose" and refers to a capsule comprising sufficient amounts of beer concentrate and alcoholic liquid to prepare one serving of reconstituted beer. Typically, one serving of reconstituted beer is in the range of 120 ml to 1000 ml.

The term "free amino nitrogen" as used herein refers to the combined concentration of individual amino acids and small peptides as determined by EBC method 9.10.1 - Free Amino Nitrogen in Beer by Spectrophotometry (IM).

Concentrations of acids as mentioned herein, unless indicated otherwise, also include dissolved salts of these acids as well as dissociated forms of these same acids and salts.

The term "iso-alpha acids" as used herein refers to substances selected from the group of isohumulone, isoadhumulone, isocohumulone, pre-isohumulone, post-isohumulone and combinations thereof. The term "iso-alpha acids" encompasses different stereo-isomers (cis-iso-alpha acids and trans-iso-alpha acids). Iso-alpha acids are typically produced in beer from the addition of hops to the boiling wort. They may also be introduced into the beer in the form of pre-isomerised hop extract. Iso-alpha-acids are intensely bitter with an estimated threshold value in water of approximately 6 ppm.

The term "hydrogenated iso-alpha acids" refers to substances selected from dihydro-iso-alpha acids, tetrahydro-isoalpha acids, hexahydro-iso-alpha acid and combinations thereof.

The term "hulupones" as used herein refers to substances selected from cohulupone, n-hulupone, adhulupone and combinations thereof. Hulupones are oxidation products of hop beta-acids.

The alcoholic beer that is used as a starting material in the present process preferably has an ethanol content of 3.5-10% ABV, more preferably an ethanol content of 4-8% ABV.

The pH of the alcoholic beer, determined after degassing, is preferably in the range of 3.5 to 5.5, more preferably in the range of 3.8 to 5.2 and most preferably in the range of 4.0 to 5.0.

In a preferred embodiment, the alcoholic beer has an original extract concentration as determined by the alcolyzer method of 4-17% (m/m), more preferably of 7-15% (m/m) and most preferably of 9-14% (m/m). The original extract concentration can be determined using the Alcolyzer Beer Analyzing System of Anton Paar GmbH. The original extract, P (as % (m/m)) is calculated in the Alcolyzer program according to the Balling formula:

$$\text{Original extract} = 100 \times (2.0665 \times A + E_R) / (1.0665 \times A + 100)$$

wherein:

A = Alcohol content of the beer as measured by Alcolyzer Beer Analyzing System, in % (m/m);
$E_R$ = Real extract of the beer, in % (m/m)

The real extract, $E_R$ [as % (m/m)], is calculated from the extract density at 20°C determined by the Tabari6 formula using the same Goldiner, Klemann and Kämpf table (Goldiner et al., Alkohol-, Stammwürze- und Korrektionstafel, Berlin, Institute für Gärungsgewerbe, 1996). The Tabari6 formula used in the Alcolyser Beer Analyzing System is as follows:

$$\rho_{\text{extract (20°C)}} = \rho_{\text{sample(20°C)}} + \rho_{\text{water (20°C)}} - \rho_{\text{alcohol (20°C)}}$$

wherein:

$\rho_{\text{extract (20°C)}}$ = density of the extract (residue) at 20°C;
$\rho_{\text{sample(20°C)}}$ = density of the sample at 20°C;
$\rho_{\text{water (20°C)}}$ = density of water at 20°C (= 0.998204 $g/cm^3$);
$\rho_{\text{alcohol (20°C)}}$ = density of the alcohol (distillate) at 20°C;

Besides ethanol, the alcoholic beer employed in the present process typically contains sugars, proteins, peptides, amino acids, riboflavin, free fatty acids and volatile flavour substances such as ethyl acetate, isoamyl acetate, phenylethyl acetate and acetaldehyde.

The riboflavin content of the alcoholic beer is preferably in the range of 40-1,000 μg/L more preferably 60-800 μg/L and most preferably 100-600 μg/L.

The alcoholic beer preferably contain 20-1,500 μg/L, more preferably 40-1,200 μg/L and most preferably 50-800 μg/L of linoleic acid.

Besides linoleic acid, the alcoholic beer typically also contains other fatty acids, such as oleic acid and/or alpha-linolenic acids. Oleic acid is preferably present in the alcoholic beer in a concentration of 60-900 $\mu$g/L, more preferably 80-700 $\mu$g/L, most preferably 100-600 $\mu$g/L.

Alpha-linolenic acid is preferably present in the alcoholic beer in a concentration of 20-800 $\mu$g/L, more preferably 40-600 $\mu$g/L, most preferably 50-500 $\mu$g/L.

The free amino nitrogen (FAN) content of the alcoholic beer is preferably in the range of 8-400 mg/L more preferably 12-300 mg/L, most preferably 20-250 mg/L.

The alcoholic beer preferably contains 0.5-6 g/L, more preferably 1-5.5 g/L, even more preferably 15-60 and most preferably 2-5 g/L of maltotetraose.

Preferably, the alcoholic beer contains maltose in a concentration of 0-1 g/L, more preferably of 0-0.5 g/L, and most preferably of 0.05-0.2 g/L.

The alcoholic beer preferably contains maltotriose in a concentration of 0.1-4 g/L, more preferably of 0.2-3.5 g/L, most preferably of 0.4-3 g/L.

Preferably, the alcoholic beer contains, 10-500 mg/L acetic acid, more preferably 20-300 mg/L acetic acid, and most preferably 25-200 mg/L acetic acid.

Preferably, at least a fraction of these volatile flavour substances is recovered in the alcoholic liquid that is separately packaged at the end of the process.

Iso-alpha acids, as well as hydrogenated alpha acids and oxidised alpha-acids (hulupones) contribute to the pleasant bitterness of beers that is appreciated by consumers. In the present process it is preferred to add these hop aids to the alcoholic liquid as solubility of the hop acids in the liquid beer concentrate is very low. Accordingly, in a preferred embodiment, the low alcohol beer contains 0-10 mg/L, more preferably less than 3 mg/L, most preferably less than 1 mg/L hop acids selected from iso-alpha acids, hydrogenated iso-alpha acids, hulupones and combinations thereof.

The alcoholic beer is preferably decarbonated prior to the distillative removal of ethanol in order to avoid excessive foaming during de-alcoholisation. Preferably, the dissolved carbon dioxide content of the alcoholic beer is reduced by decarbonation to 0-4 g/L, more preferably 0-3.5 g/L, and most preferably 0-3 g/L dissolved carbon dioxide.

Removal of ethanol by distillation is preferably carried out at a temperature in the range of 10-100 °C, more preferably in the range of 20-65 °C, even more preferably in the range of 30-50 °C, and most preferably in the range of 40-46 °C.

The removal of ethanol by distillation is preferably carried out at a pressure in the range of 0.01-500 mbar, more preferably in the range of 1-200 mbar, even more preferably in the range of 5-150 mbar and most preferably in the range of 80-110 mbar.

The low alcohol beer obtained in the present process after removal of ethanol preferably has an ethanol content of 0-6 %ABV, more preferably of 0-1 %ABV, even more preferably of 0-0.5 %ABV and most preferably of 0-0.05 %ABV.

The alcoholic liquid that is obtained after distillative removal of ethanol from the alcoholic beer preferably has an ethanol content of 13-90 wt.%, more preferably of 25-85 wt.% and most preferably of 40-82 wt.%. The water content of the alcoholic liquid preferably is 10-87 wt.%, more preferably 15-75 wt.% and most preferably 18-60 wt.%.

In an embodiment of the present process, distillative removal of ethanol from the alcoholic beer yields an alcoholic liquid having a low ethanol content of less than 40 wt.%, more preferably of 12-35 wt.% and most preferably of 15-30 wt.%. Production of an alcoholic liquid having a low ethanol content may be advantageous from a safety perspective, especially if the distillative removal takes place in a plant that is not suited for handling flammable liquids. Preferably, in case the ethanol content of the alcoholic liquid is less than 40 wt.%, the alcoholic liquid is concentrated to an ethanol content of 40-90 wt.%, more preferably of 45-85 wt.% and most preferably of 50-82 wt.%. The ethanol content of the alcoholic liquid is preferably increased by means of distillation or reverse osmosis, more preferably by means of distillation and most preferably by means of vacuum distillation.

In the present process, removal of water from the low alcohol beer is achieved by membrane separation and/or freeze concentration.

Preferably, the membrane separation employed in the present process is reverse osmosis or nanofiltration. Most preferably, the present process employs reverse osmosis to remove water from the low alcohol beer.

Membrane separation of the low alcohol beer is preferably carried out at a temperature in the range of -2°C to 40°C, more preferably in the range of 3-22°C.

The pressure employed during membrane separation is preferably in the range of 6 to 80 bare, more preferably in the range of 10 to 75 bar, and most preferably in the range of 15 to 70 bar.

In a preferred embodiment, the membrane separation is carried out with a membrane having a magnesium sulphate rejection of 80-100%, more preferably 90-100% and most preferably 95-100% when measurement is carried out using 2,000 mg/L aqueous magnesium sulphate solution at 0.48 MPa, 25°C and 15% recovery.

In a further preferred embodiment, membrane separation is carried out using a membrane with a glucose rejection of 80-100%, more preferably 90-100% and most preferably 95-100% when measurement is carried out using 2,000 mg/L aqueous glucose solution at 1.6 MPa, 25°C and 15% recovery.

According to a particularly preferred embodiment, membrane separation is carried out by means of reverse osmosis or forward osmosis using a membrane with a sodium chloride rejection of 80-100%, more preferably 90-100% and most preferably 95-100% when measurement is carried out using 2000 mg/L sodium chloride solution at 10.3 bar, 25°C, pH 8 and 15% recovery.

Water can also suitably be removed from the low alcohol beer a freeze concentration process. In this method, water is withdrawn from the beer by the phase transformation from liquid to ice crystal. This process has mainly three stages: crystallization of water, growth of water crystals and separation of water crystals, performed in specially designed equipment for each purpose. Basically, the temperature of the low alcohol beer is reduced to a value such as to freeze at least a part of its water without reaching the eutectic point of the mixture. When the ice crystals are sufficiently large, e.g. not smaller than 100 $\mu$m in diameter, said crystals can be separated from the concentrated liquid. Because of the low process temperature, lower than 0 °C, thermal degradation and aroma losses by evaporation are avoided.

According to a preferred embodiment, freeze concentration is carried out in a plant comprising a scraped surface heat exchanger, a stirred growth recrystallizer and a separation unit. The separation unit preferably is a separation wash column or a separation filter (e.g. a vacuum belt filter). Most preferably, the separation unit is a wash column.

In the present process, freeze concentration of the low alcohol beer preferably comprises the steps of:

(a) cooling the liquid beer to freezing point in a scraped surface heat exchanger;
(b) introducing the cooled beer into a stirred growth recrystallizer to produce a slurry containing ice crystals;
(c) returning the slurry to step (a) until the ice crystals in the slurry have reached a mass weighted average diameter of 100 $\mu$m or more; and
(d) removing ice crystals from the slurry in a separation unit to produce a liquid concentrate.

Preferably, the slurry has a temperature in the range of -1°C to -12°C, more preferably in the range of -2°C to -10°C at the beginning of step (d).

The total residence time in the stirred growth recrystallizer preferably exceeds 10 minutes, more preferably it is in the range of 15 minutes to 3 hours.

In concentrating beer by freeze concentration, ethanol can become a limiting factor for the maximum degree of concentration. Increasing concentrations of ethanol during the concentration process result in progressively lower crystallization temperatures and progressively higher viscosities. This problem is negated by the present process since the liquid beer concentrate is prepared from low alcohol beer.

Reduction of the water content of the low alcohol beer by means of membrane separation and/or freeze concentration is hampered by the presence of significant quantities of dissolved carbon dioxide in the low alcohol beer. Accordingly, it is preferred to employ an alcohol-free beer containing 0-500 mg/L, more preferably 0-100 mg/L, and most preferably 0-20 mg/L dissolved carbon dioxide.

In a preferred embodiment, the water content of the low alcohol beer is reduced by membrane filtration and/or freeze concentration by at least 70%, more preferably by at least 75%, and most preferably by at least 80%.

The ethanol content of the liquid beer concentrate that is produced in the present process, preferably does not exceed 1.0% ABV, more preferably it does not exceed 0.5% ABV, even more preferably it does not exceed 0.3% ABV, most preferably it does not exceed 0.1% ABV.

The pH of the liquid beer concentrate is preferably in the range of 3.0 to 6.0, more preferably in the range of 3.2 to 5.5 and most preferably in the range of 3.5 to 5.0.

The liquid beer concentrate preferably has a water content in the range of 35-80 wt.%, more preferably in the range of 40-75 wt.% and most preferably in the range of 45-70 wt.%.

In a preferred embodiment, the liquid beer concentrate has a density of 20 to 60 °P, more preferably a density of 24 to 50 °P, and most preferably a density of 28 to 42 °P.

Riboflavin, free fatty acids (e.g. linoleic acid), amino acids and small peptides are substances that are naturally present in malted barley and that typically occur in significant concentrations in low alcohol beer. Likewise, maltotetraose is found in significant concentrations in low alcohol beer as this oligosaccharide is formed by enzymatic hydrolysis of starch during mashing and is not digested by yeast. Due to the fact that the liquid beer concentrate in the capsule is obtained from low alcohol beer using a concentration method that only removes water, or only water and low molecular weight substances and ions, the liquid beer concentrate typically contains appreciable levels of riboflavin, linoleic acid, amino acids, peptides and/or maltotetraose.

The riboflavin content of the liquid beer concentrate is preferably in the range of 250-3,000 mg/L more preferably 300-2,500 $\mu$g/L, more preferably 350-2,200 $\mu$g/L and most preferably 400-2,000 $\mu$g/L.

The liquid beer concentrate preferably contain 150-5,000 $\mu$g/L, more preferably 200-4,000 $\mu$g/L, even more preferably 250-3,500 $\mu$g/L and most preferably 300-3,000 $\mu$g/L of linoleic acid.

Besides linoleic acid, the liquid beer concentration typically also contains other fatty acids, such as oleic acid and/or alpha-linolenic acids. Oleic acid is preferably present in the liquid beer concentrate in a concentration of 300-3,000 $\mu$g/L, more preferably 400-2,500 $\mu$g/L, even more preferably 500-2,000 $\mu$g/L and most preferably 600-1,800 $\mu$g/L.

Alpha-linolenic acid is preferably present in the liquid beer concentrate in a concentration of 100-1,200 µg/L, more preferably 120-1,100 µg/L, even more preferably 150-1,000 µg/L and most preferably 180-900 µg/L.

The free amino nitrogen (FAN) content of the liquid beer concentrate is preferably in the range of 60-1,000 mg/L more preferably 80-800 mg/L, even more preferably 90-700 mg/L and most preferably 100-600 mg/L.

The liquid beer concentrate preferably contains 10-100 g/L, more preferably 12-80 g/L, even more preferably 15-60 and most preferably 18-40 g/L of maltotetraose.

Preferably, the liquid beer concentrate contains maltose in a concentration of 0-20 g/L, more preferably of 0-15 g/L, even more preferably of 0.5-10 g/L and most preferably of 1-8 g/L.

The liquid beer concentrate preferably contains maltotriose in a concentration of 1-30 g/L, more preferably of 2-25 g/L, even more preferably of 2.5-22 g/L and most preferably of 3-20 g/L.

Preferably, the liquid beer concentrate contains, 100-1,200 mg/L acetic acid, more preferably 120-1,000 mg/L acetic acid, even more preferably 150-900 mg/L acetic acid and most preferably 180-800 mg/L acetic acid.

The liquid beer concentrate that is obtained by the present process offers the advantage that it has a relatively high surface tension due to the virtual absence of ethanol. A high surface tension is advantageous as it reduces unwanted foaming during the filling of the beer concentrate into capsules or containers. Preferably, the liquid beer concentrate has a surface tension of at least 42.5 mN/m, more preferably of 43.5-55 mN/m and most preferably of 45-53 mN/m.

In order to accurately measure the surface tension about 300 mL of concentrate is transferred to an open container that is kept in a water bath set at 20.0°C until the sample is fully degassed. release initial gas. Next, the sample is carefully poured in a wide and large (500 mL) test beaker. In order to assure homogeneity, a plastic disposable stirrer id used to carefully stir the sample. A homogeneous sub-sample of 150 ml is introduced in a measuring cup. Surface tension is measured using a Kruss 9 tensiometer, equipped with Wilhelmy plate. The instrument protocol is followed, starting with a calibration (pure water = 72,6 mN/m) followed by measuring the surface tension of the samples. In between measurements the probe/plate is carefully cleaned and shortly held (with pincers) in the hot flame of the Bunsen-burner, making sure no residual sample on the probe affects the result of the next measurement.

The liquid beer concentrate may suitably be combined with one or more other components before it is packaged.

Preferably, water and ethanol together constitute 85-100 wt.%, more preferably 90-100 wt.% and most preferably 95-100 wt.% of the alcoholic liquid.

The alcoholic liquid that is packaged together with the liquid beer concentrate in the present method preferably contains appreciable levels of beer flavour volatiles (e.g. ethyl acetate, isoamyl acetate, phenylethyl acetate, amyl alcohols and phenylethyl alcohol) that originate from the alcoholic beer.

Preferably, the alcoholic liquid comprises, per kg of ethanol, 50-2,000 mg, more preferably 70-1,500 mg, even more preferably 90-1,200 mg and most preferably 100-800 mg of ethyl acetate.

Preferably, the alcoholic liquid comprises, per kg of ethanol, 5-200 mg, more preferably 7-150 mg, even more preferably 9-120 mg and most preferably 10-80 mg of isoamyl acetate.

In a preferred embodiment the alcoholic liquid contains, per kg of ethanol, 400-5,000 mg, more preferably 600-4,000 mg, even more preferably 700-3,500 mg and most preferably 800-3,00 mg of amyl alcohols. Here the term "amyl alcohols" refers to alcohols with the formula $C_5H_{12}O$.

In another preferred embodiment the alcoholic liquid contains, per kg of ethanol, 8-240 mg, more preferably 11-170 mg, even more preferably 13-140 mg and most preferably 15-100 mg of phenylethyl alcohol.

Preferably, the alcoholic liquid contains, per kg of ethanol, 2-50 mg, more preferably 3-40 mg, even more preferably 3.5-32 mg and most preferably 4-25 mg of phenyl ethyl acetate.

As already mentioned above, in a preferred embodiment, prior to the packaging together with the liquid beer concentrate, the alcoholic liquid is combined with hop acids selected from iso-alpha acids, hydrogenated iso-alpha acids, hulupones and combinations thereof. More preferably, the alcoholic liquid is combined with iso-alpha acids. Iso-alpha acids may suitably be provided in the form of pre-isomerised hop extract.

Preferably, hop acids are added to the alcoholic liquid to achieve a concentration of 50-2,000 mg/L, more preferably 100-1,500 mg/L, most preferably 200-1,000 mg/.

Flavouring is an example of a component that may suitably be added to the alcoholic liquid and/or the liquid beer concentrate before they are packaged.

In the present process, the liquid beer concentrate and the alcoholic liquid are preferably packaged together in a weight ratio of 7:1 to 1:1, more preferably in a weight ratio of 6:1 to 1.2:1, most preferably in a weight ratio of 5:1 to 1.5:1.

Another aspect of the invention relates to a packaged liquid beer concentrate that is obtained by the present process, wherein the packaged liquid beer concentrate comprises a single serve capsule with at least two compartments, including a first compartment and a second compartment; wherein the first compartment comprises the liquid beer concentrate, said liquid beer concentrate having an ethanol content that does not exceed 1.0% ABV, and wherein the second compartment comprises the alcoholic liquid.

The single serve capsule of the present invention preferably contains two compartments, one comprising the liquid beer concentrate, the other comprising the alcoholic liquid.

In accordance with a preferred embodiment, the capsule of the present invention comprises a container with at least two compartments separated by separating wall, including a first compartment containing the liquid beer concentrate and a second compartment containing the alcoholic liquid, and wherein the compartments are closed, e.g. by a sealed foil or a lid.

Preferably the first compartment of the single serve capsule contains 10-60 mL, more preferably 15-50 mL, most preferably 20-40 mL of the liquid beer concentrate.

The second compartment of the single serve capsule preferably contains 4-25 mL, more preferably 6-20 mL, most preferably 7-15 mL of the alcoholic liquid.

The combined internal volume of the first compartment and the second compartment preferably does not exceed 75 mL, more preferably it is in the range of 15-65 mL, most preferably in the range of 20-60 mL.

A further aspect of the invention relates to a packaged liquid beer concentrate obtained by the manufacturing process described herein before, wherein the packaged liquid beer concentrate is a kit of parts comprising a first container containing 10-1,000 mL of the liquid beer concentrate, said liquid beer concentrate having an ethanol content that does not exceed 1.0% ABV, and a second container containing 4-500 mL of the alcoholic liquid.

The first container preferably is a capsule or a bottle. Most preferably, the first container is a capsule. Preferably, the first container has an internal volume of 10-60 mL, more preferably of 15-50 mL.

The second container preferably is a capsule or a bottle. Most preferably, the first container is a capsule. Preferably, the first container has an internal volume of 4-25 mL, more preferably of 6-20 mL.

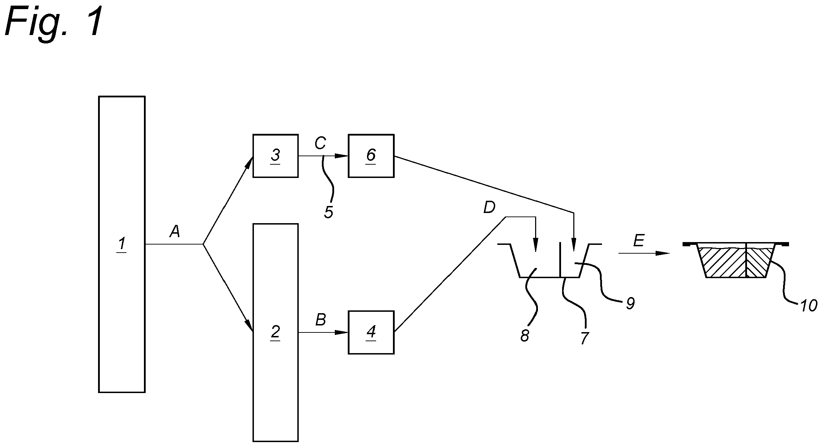

Figure 1 provides a schematic representation of a method of preparing a single-serve capsule according to the invention. Step 1 of the depicted method comprises the brewing of a non-hopped alcoholic beer, e.g. a non-hopped pilsner having an ethanol content of 5% ABV. Step 2 comprises the de-alcoholisation of the non-hopped alcoholic beer to produce a non-alcoholic beer and an alcoholic liquid. Step 3 comprises concentration of the non-alcoholic beer by means of reverse osmosis or freeze concentration to produce a liquid beer concentrate. Step 4 comprises mixing of pre-isomerised hop extract with the alcoholic liquid produced in step 2. Step 5 comprises the filling of a two-compartment single serve capsule by introducing the liquid beer concentrate in one compartment of the capsule and the alcoholic liquid in the other compartment of the same capsule. Step 6 comprises the sealing of the capsule.

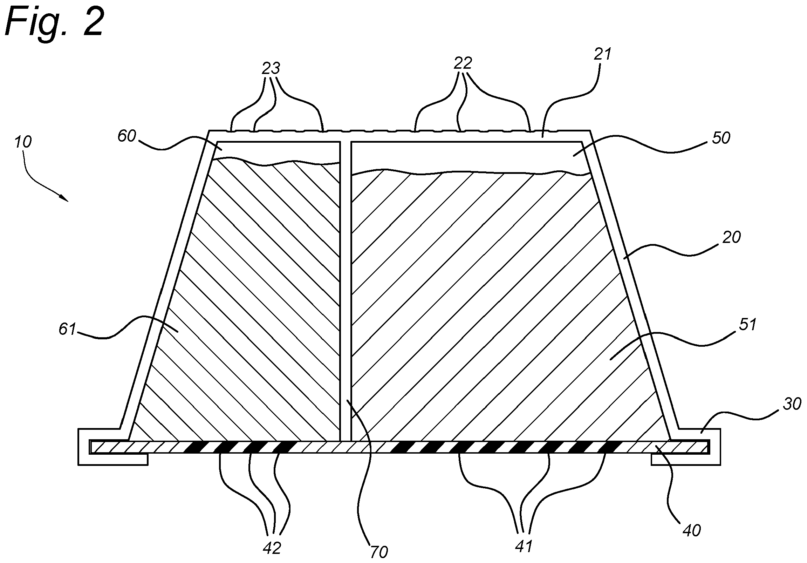

Figure 2 shows a single-serve capsule (10) comprising a body (20) composed of a sheet of aluminium, having the general shape of a truncated cone with a rim (30) at its base. The body (20) terminates at its smallest end with an obtuse cone (21).

The rim (30) is formed by pinching the body around a foil (40) and the capsule (10) is sealed by thermosealing the body (20) and the foil (40). The foil (40) may be composed of aluminium.

The capsule (10) comprises a first compartment (50) and a second compartment (60), separated by a dividing wall (70). The larger first compartment (50) holds a liquid beer concentrate (51) while the smaller second compartment (60) holds an alcoholic liquid (61).

The obtuse cone (21) comprises weakened recesses (22) in the part that defines the first compartment (50). The obtuse cone (21) further contains weakened recesses (23) in the part that defines the second compartment (60).

The foil (40) comprises a number of weakened sections (41) in the part that defines the first compartment (50) and weakened recesses (42) in the part that defines the second compartment (60).

In use, both the weakened recesses (22) and (23) are punctured by tubular inlets and the weakened sections (41) and (42) in the foil are penetrated by tubular outlets. Next, carbonated water that is injected into the first compartment (50) and into the second compartment (60) through the tubular inlets washes out the liquid beer concentrate (51) from the first compartment (50) and the alcoholic liquid (61) from the second compartment (60) through the output channels.

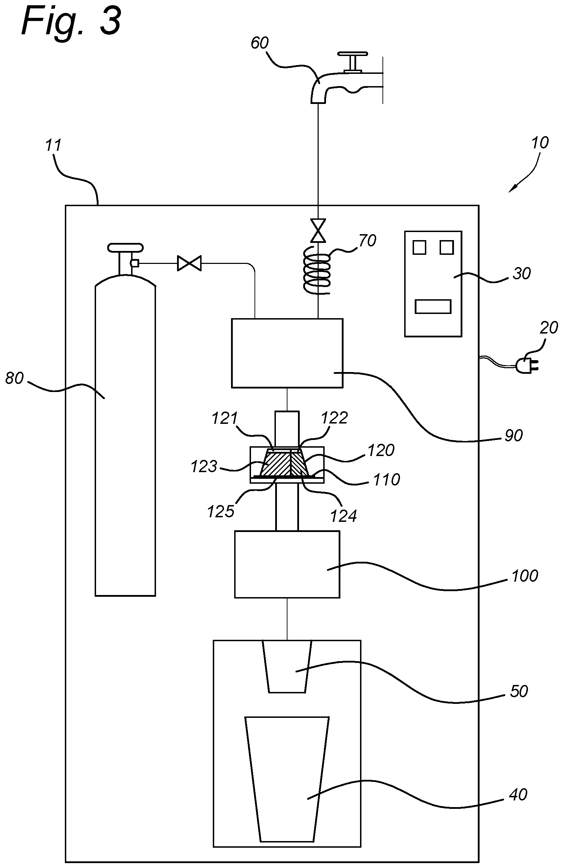

Figure 3 shows a representation of a device (10) for preparing a reconstituted beer. The device includes a housing (11) which houses the mechanical and electronic components of the device (10). The housing (11) can be formed of plastic and/or metal.

The device (10) comprises a power supply (20) and a control system (30) operable to activate the device and control functions of the device (e.g. the volume, temperature and/or alcohol content of the dispensed reconstituted beer). Also shown is an empty glass (40) that is positioned underneath the dispensing unit (50).

The device (10) also includes a source of water in the form of a water tap (60) and a cooling unit (70). The device (10) further comprises a cylinder (80) containing pressurised carbon dioxide, a carbonation unit (90), a mixing unit (100) and a receptacle (110) for receiving a two-compartment single serve capsule (120).

The single serve capsule (120) comprises a first compartment (121) containing a liquid beer concentrate (123) and a second compartment (122) containing an alcoholic liquid (124). The compartments (121, 122) are sealed by a foil (125).

The device (10) comprises means (126) for opening the first and second compartments (121,122) of the single serve capsule (120).

In use, a consumer can place the single serve capsule (120) in the receptacle (110) of the device (10). Next, the consumer can activate the device (10) using the control system (30) and await dispensing of the reconstituted beer from the dispensing unit (50) into the glass (40).

Upon activation of the device (10) water from the tap (60) and pressurized carbon dioxide from the cylinder (80) are dispensed to the carbonation unit (90). During its passage to the carbonation unit (90) the water is cooled by the cooling unit (70). Once the adequate amounts of water and carbon dioxide have been mixed in the carbonation unit (90), the carbonated is released from the carbonation unit (90) and flows through the single serve capsule (120) to the mixing unit (100). The stream of carbonated water from the carbonation unit (90) follows two different flow paths, one flow path passes through the first compartment (121) of the single serve capsule (120) while the other flow path passes through the second compartment (123) of the single serve capsule (120).

While passing through the single serve capsule (120), the carbonated water washes out the liquid beer concentrate (123) and the alcoholic liquid (124) into the mixing unit (100). In the mixing unit (100) the carbonated water, the washed out liquid beer concentrate and the washed out alcoholic liquid are intimately mixed to produce a clear reconstituted beer.

Next the clear reconstituted beer is released from the mixing unit (100) through the dispensing unit (50) into glass (40) under the formation of a foam head.

It will be understood that in the device of Figure 1 the single serve capsule (120) may be replaced by two separate capsules, one containing the liquid beer concentrate, the other containing the alcoholic liquid.

The invention is further illustrated by the following non-limiting examples.

## EXAMPLES

### Example 1

A non-hopped lager (containing 5% ABV was de-alcoholised by vacuum distillation (Schmidt-Bretten, Bretten, Germany - feed: 5 hL/hr; steam mass flow rate: 100 kg/h; outlet pressure: 3.5 bar; vacuum setting: 90 mbar; outlet temperature: 3°C). The resulting de-alcoholised beer had an ethanol content of 0.01% ABV.

Distillate produced during de-alcoholisation was recovered and analysed. The results are shown in Table 1.

**Table 1**

| Ethanol | 60 wt.% |
|---|---|
| Ethyl acetate | 50.2 mg/L |
| Isoamyl acetate | 4.56 mg/L |
| Amyl alcohols | 206 mg/L |
| Phenylethyl alcohol | 5.09mg/L |
| Phenyl ethyl acetate | 2.77 mg/L |

The dealcoholized non-hopped lager was concentrated by means of nanofiltration using the following set-up:

**Nanofiltration membrane**

| Type | Configuration: Spiral wound<br>Membrane polymer: Composite polyamide<br>Brine spacer material: Polypropylene |
|---|---|
| Specifications | Permeate Flow:<br>• $MgSO_4$: 7.6 m$^3$/d<br>• NaCl: 9.5 m$^3$/d<br><br>Stabilised salt rejection[1]:<br>• $MgSO_4$: >97% (2000 ppm, 4.8 bar, 25 °C, 15% recovery, pH 6.5)<br>• NaCl: 89-95% (500 ppm, 4.8 bar, 25 °C, 15% recovery, pH 7.0) |

(continued)

| | |
|---|---|
| | Nominal membrane area: 7.9 m² |
| [1] Equates to a MW cut-off of appr. 200 Da | |

**Configuration**

| | |
|---|---|
| A (total length) | = 1016 mm |
| B (ATD diameter) | = 100.3 mm |
| C (connection diameter) | = 19.1 mm |
| $D_F$ (core tube extension – feed side) | = 26.7 mm |
| $D_C$ (core tube extension – conc. side) | = 26.7 mm |

**Maximum operating limits**

- Pressure: 80 bar
- Temperature: 28 °C
- Pressure drop: 0.7 bar
- Feed flow: 3.6 m³/h
- Chlorine concentration: <0.1 ppm
- Feed water SDI (15 min.) : 5.0
- Feed water turbidity: 1.0 NTU
- Feed water pH: 3.0-10.0
- Maximum ratio of concentrate to permeate flow for any element: 5:1

**Filtration run**

Circulation of the beer was effected by a piston pump. This pump has a capacity of 1 m³/h and a maximum discharge pressure of 20-80 bar. The test-unit was limited to approximately 30 bar and was protected by means of an overpressure relief valve having a set-point of 40 bar.

Initial permeate production started at a pressure of around 15 bar (osmotic pressure).

In total 100 litres of beer were filtered, yielding 84.6 litres of permeate and 16.1 litres of liquid concentrate. Consequently, the concentration factor achieved was 100/15.4 = 6.5.

The composition of the beer concentrate so obtained is shown in Table 2.

**Table 2**

| | |
|---|---|
| Acetic acid | 310 mg/L |
| Riboflavin | 890 μg/L |
| Oleic acid | 1040 μg/L |

(continued)

| | |
|---|---|
| Linoleic acid | 980 $\mu$g/L |
| Alpha-linolenic acid | 630 $\mu$g/L |
| Free amino nitrogen | 310 mg/L |
| Maltose | 1.1 g/L |
| Maltotriose | 7.0 g/L |
| Maltotetraose | 22 g/L |

The liquid beer concentrate had a surface tension of 46 mN/m.

**Comparative Example A**

A commercial hopped lager beer having an alcohol content of 5.0% ABV and iso-alpha acids content of 19 mg/L was concentrated by means of nanofiltration using the same set-up as in Example 1.

Initial permeate production started at a pressure of around 4 bar (osmotic pressure). In total 200 litres of beer were filtered, yielding 172.3 litres of permeate and 27.7 litres of concentrate. Consequently, the concentration factor achieved was 200/27.7 = 7.2.

The hopped, alcoholic beer concentrate so obtained was cloudy, had an ethanol content of 4.71% ABV, a specific gravity of 1.8298 (20°P) and a surface tension of 39.7 mN/m. The concentrate contained 78.7 mg/L iso-alpha acids, meaning that 42.5% of the iso-alpha acids were lost during the nanofiltration step.

**Example 2**

30 mL of the beer concentrate of Example 1 was combined with 170 mL of carbonated water having an ethanol content of 5.9% ABV to produce a reconstituted beer having a temperature of 5°C.

The reconstituted beer so obtained was clear (i.e. not hazy) and had the typical yellow colour of a lager, as well as satisfactory foam properties.

The evaluation of the reconstituted beer by an expert panel showed that this beer had a pleasant taste similar to that of ordinary lagers.

**Example 3**

30 mL of the beer concentrate of Example 1 is combined with 170 mL of carbonated water having an ethanol content of 5.9% ABV to produce a reconstituted beer having a temperature of 5°C.This time the ethanol containing carbonated water is prepared by mixing 16.6 parts by weight of the alcoholic distillate of Example 1 with 153.3 parts by weight of carbonated water.

Again, the reconstituted beer so obtained is clear (i.e. not hazy) and has the typical yellow colour of a lager, as well as satisfactory foam properties.

The evaluation of the reconstituted beer by an expert panel shows that this beer had a pleasant taste that is preferred over the taste of the reconstituted beer of Example 2.

**Example 4**

The liquid beer concentrate of Comparative Example A and the beer concentrate of Example 1 were standardised to a concentration factor of 6 (i.e. 6-fold more concentrated than the original non-hopped lager) by adding a diluent as shown in Table 3.

**Table 3**

| Sample | Liquid beer concentrate | Diluant |
|---|---|---|
| A | Comparative Example A | Demineralised water |
| B | Example 1 | Demineralised water |

(continued)

| Sample | Liquid beer concentrate | Diluant |
|--------|------------------------|---------|
| C | Example 1 | Demineralised water and ethanol to produce a concentrate containing 5% ABV ethanol |
| D | Example 1 | Demineralised water and pre-isomerised hop extract, to produce a concentrate containing 120 mg/L of iso-alpha acids |

Following preparation, the samples were kept at 0°C for 7 days. Next, the turbidity of the samples was measured at 0°C (in triplicate) at angles of scatter of 25° and 90°, using a Sigrist photometer. The average results are shown in Table 4, in EBC units.

**Table 4**

| Sample | Turbidity | |
|--------|-----------|---------|
| | 90° | 25° |
| A | >100 | >100 |
| B | 46.07 | 65.93 |
| C | 42.97 | 62.17 |
| D | 62.80 | 78.33 |

These results showed that the introduction of iso-alpha acids into the beer concentrate caused haze formation, probably as a result of precipitation of iso-alpha acids.

Aliquots of samples A, B, C and D are stored at 30°C and 40°C for 3 months during which period concentration levels of ethyl esters, turbidity and colour are monitored.

It is found that samples B and D are more stable than the other samples. Unlike samples B and D, samples A and C show significant formation of ethyl esters during the storage period.

### Example 5

A de-alcoholised non-hopped lager and an alcoholic distillate are produced in the same way as in Example 1.

The de-alcoholised non-hopped beer is concentrated by means of reverse osmosis using a reverse osmosis flat sheet filtration membrane made of thin film composite comprising a polyamide membrane layer on a polyester (PET) support material (RO90, ex Alfa Laval, operating pressure 5-25 bar). This membrane has a rejection of at least 90%, measured on 2000 ppm NaCl, at 9 bar and 25°C.

### Example 6

A single serve capsule according to the invention is prepared using a capsule comprising two compartments. One compartment (compartment A) has an internal volume of 20 mL, the other compartment (compartment B) has an internal volume of 35 mL.

The alcoholic distillate of Example 1 is mixed with a pre-isomerised hop extract to produce a solution containing 210 mg/L iso-alpha acids.

18 mL of the concentrated alcoholic liquid containing hop extract is introduced in compartment A of the capsule. Furthermore, 32 mL of the liquid beer concentrate of Example 1 is introduced in compartment B. After filling, the compartments are sealed with a flexible foil.

### Example 7

A dealcoholized non-hopped lager was concentrated by means of nanofiltration as described in Example 1. The beer concentrate so obtained (Concentrate A) was subjected to accelerated storage at 30°C and 40°C. The same storage tests were conducted with the same concentrate after ethanol had been added in a concentration of 5 wt.% (Concentrate B).

Before the storage test and after 3 months storage the concentration levels of a number of beer flavour substances were determined. The results of these analysis are shown in Table 5.

**Table 5**

| Samples | | Microgram/L | | | | | |
|---|---|---|---|---|---|---|---|
| | | Ethyl octanoate | Ethyl acetate | Ethyl propionate | Ethyl butanoate | Ethyl 3-methyl-butanoate | Ethyl phenyl-acetate |
| A | Fresh | 0 | 640 | 4.7 | 7.9 | 0.1 | 0.0 |
| | 30°C | 0 | 400 | 4.2 | 6.2 | 0.1 | 0.0 |
| | 40°C | 0 | 320 | 4.7 | 6.0 | 0.2 | 0.0 |
| B | Fresh | 0 | 720 | 20 | 52 | 1.2 | 0.0 |
| | 30°C | 4,600 | 2,040 | 74 | 163 | 9.7 | 0.2 |
| | 40°C | 4,320 | 4,040 | 152 | 230 | 25 | 0.5 |

## Example 8

A lager beer having an ethanol content of 5 vol.% was concentrated by means of nanofiltration as described in Comparative Example A. Accelerated storage tests were conducted with this concentrate (Concentrate A) at 30°C and 40°C.

Before the storage test and after 3 months the concentration levels of a number of beer flavour substances were determined. The results of these analyses are shown in Table 6.

**Table 6**

| Samples | Microgram/L | |
|---|---|---|
| | Ethyl 3-methylbutanoate | Ethyl phenylacetate |
| Fresh | 8.5 | 0.0 |
| 30°C | 23 | 0.2 |
| 40°C | 47 | 0.4 |

## Example 9

Two reconstituted beers were prepared by mixing 32 mL of beer concentrate, with 11.4 mL of alcoholic liquid and 205 mL of carbonated water (Royal Club™ soda water, the Netherlands).

The compositions of the beer concentrates and the alcoholic liquids used in the preparation of the reconstituted beers are shown in Table 7.

**Table 7**

| | Reconstituted beer A | Reconstituted beer B |
|---|---|---|
| Beer concentrate | Beer concentrate of Example 1 | Beer concentrate of Example 1, containing 6.56 mg iso-alpha acids per mL |
| Alcoholic liquid | Ethanol (95%), containing 18.42 mg iso-alpha acids per mL | Ethanol (95%) |

Reconstituted beer A was completely clear, had a nice foam head and a pleasant bitter taste. Reconstituted beer B contained some precipitate.

## Claims

1. A process of manufacturing a packaged liquid beer concentrate, said process comprising:

    • providing an alcoholic beer comprising 3-12% ABV ethanol;

• removing at least a part of the ethanol from the alcoholic beer by means of distillation, thereby producing (i) a low alcohol beer having an ethanol content of 0-1.5% ABV alcohol and (ii) an alcoholic liquid containing at least 10% ABV ethanol;

• removing at least 70 wt.% of the water present in the low alcohol beer by means of membrane separation and/or freeze concentration to produce a liquid beer concentrate, wherein the membrane separation is selected from nanofiltration, reverse osmosis and forward osmosis;

• if the alcoholic liquid contains less than 20% ABV ethanol, concentrating the alcoholic liquid to an ethanol content of at least 30% ABV by means of distillation, reverse osmosis or forwards osmosis;

• separately packaging the liquid beer concentrate and the alcoholic liquid within a single container or within separate containers that together form a kit of parts.

2. Process according to claim 1, wherein ethanol is removed from the alcoholic beer by means of vacuum distillation at temperature of 10-100 °C and a pressure of not more than 500 mbar.

3. Process according to claim 1 or 2, wherein membrane separation is carried out using a membrane with a glucose rejection of 80-100%, more preferably 90-100% and most preferably 95-100% when measurement is carried out using 2,000 mg/L aqueous glucose solution at 1.6 MPa, 25°C and 15% recovery.

4. Process according to any one of the preceding claims, wherein membrane separation is carried out using a membrane with a sodium chloride rejection of 80-100%, more preferably 90-100% and most preferably 95-100% when measurement is carried out using 2000 mg/L sodium chloride solution at 10.3 bar, 25°C, pH 8 and 15% recovery.

5. Process according to any one of the preceding claims, wherein membrane separation is carried out at a pressure of 6-80 bar.

6. Process according to any one of the preceding claims, wherein water is removed from the low alcohol beer by means of reverse osmosis.

7. Process according to claim 1 or 2, wherein the liquid beer concentrate is obtained by removing water from the low alcohol beer by means of freeze concentration.

8. Process according to any one of the preceding claims, wherein the alcoholic beer comprising 3-12% ABV ethanol contains 0-10 mg/L of hop acids selected from iso-alpha acids, hydrogenated iso-alpha acids, hulupones and combinations thereof

9. Process according to any one of the preceding claims, wherein hop acids are added the alcoholic liquid before packaging, said hop acids being selected from iso-alpha acids, hydrogenated iso-alpha acids, hulupones and combinations thereof.

10. Process according to any one of the preceding claims, wherein the liquid beer concentrate and the alcoholic liquid are packaged together in a weight ratio of 7:1 to 1:1.

11. Process according to any one of the preceding claims, wherein the liquid beer concentrate contains 250-3,000 $\mu$g/L of riboflavin.

12. Process according to any one of the preceding claims, wherein the alcoholic liquid contains, per kg of ethanol, 50-2,000 mg of ethyl acetate

13. A packaged liquid beer concentrate obtained by a process according to any one of the preceding claims, wherein the packaged liquid beer concentrate comprises a single serve capsule with at least two compartments, including a first compartment and a second compartment; wherein the first compartment comprises the liquid beer concentrate, said liquid beer concentrate having an ethanol content that does not exceed 1.0% ABV, and wherein the second compartment comprises the alcoholic liquid.

14. A packaged liquid beer concentrate obtained by a process according to any one of claims 1-12, wherein the packaged liquid beer concentrate is a kit of parts comprising a first container containing 10-1,000 mL of the liquid beer concentrate, said liquid beer concentrate having an ethanol content that does not exceed 1.0% ABV, and a second container containing 4-500 mL of the alcoholic liquid.

**Patentansprüche**

1. Verfahren zur Herstellung eines verpackten flüssigen Bierkonzentrats, wobei das Verfahren umfasst:

   • Bereitstellen eines alkoholischen Bieres, das 3-12 Vol.-% Ethanol enthält;
   • Entfernen mindestens eines Teils des Ethanols aus dem alkoholischen Bier durch Destillation, wodurch (i) ein alkoholarmes Bier mit einem Ethanolgehalt von 0-1,5 Vol.-% Alkohol und (ii) eine alkoholische Flüssigkeit mit mindestens 10 Vol.-% Ethanol hergestellt wird;
   • Entfernen von mindestens 70 Gew.-% des in dem alkoholarmen Bier vorhandenen Wassers mittels Membrantrennung und/oder Gefrierkonzentration, um ein flüssiges Bierkonzentrat herzustellen, wobei die Membrantrennung aus Nanofiltration, Umkehrosmose und Vorwärtsosmose ausgewählt wird;
   • wenn die alkoholische Flüssigkeit weniger als 20 Vol.-% Ethanol enthält, Konzentrieren der alkoholischen Flüssigkeit auf einen Ethanolgehalt von mindestens 30 Vol.-% mittels Destillation, Umkehrosmose oder Vorwärtsosmose;
   • getrenntes Verpacken des flüssigen Bierkonzentrats und der alkoholischen Flüssigkeit in einem einzigen Behältnis oder in getrennten Behältnissen, die zusammen einen Satz von Teilen bilden.

2. Verfahren nach Anspruch 1, wobei Ethanol aus dem alkoholischen Bier durch Vakuumdestillation bei einer Temperatur von 10-100°C und einem Druck von nicht mehr als 500 mbar entfernt wird.

3. Verfahren nach Anspruch 1 oder 2, wobei die Membrantrennung unter Verwendung einer Membran mit einer Glukoserückweisung von 80-100%, bevorzugter 90-100% und am meisten bevorzugt 95-100%, durchgeführt wird, wenn die Messung unter Verwendung von 2.000 mg/L wässriger Glukoselösung bei 1,6 MPa, 25°C und 15% Rückgewinnung durchgeführt wird.

4. Verfahren nach einem der vorhergehenden Ansprüche, wobei die Membrantrennung unter Verwendung einer Membran mit einer Natriumchloridrückhaltung von 80-100%, bevorzugt 90-100% und am meisten bevorzugt 95-100%, durchgeführt wird, wenn die Messung unter Verwendung von 2000 mg/L Natriumchloridlösung bei 10,3 bar, 25°C, pH 8 und 15% Rückgewinnung durchgeführt wird.

5. Verfahren nach einem der vorhergehenden Ansprüche, wobei die Membrantrennung bei einem Druck von 6-80 bar durchgeführt wird.

6. Verfahren nach einem der vorhergehenden Ansprüche, wobei das Wasser aus dem alkoholarmen Bier durch Umkehrosmose entfernt wird.

7. Verfahren nach Anspruch 1 oder 2, wobei das flüssige Bierkonzentrat durch Entfernen von Wasser aus dem alkoholarmen Bier mittels Gefrierkonzentration gewonnen wird.

8. Verfahren nach einem der vorhergehenden Ansprüche, wobei das alkoholische Bier mit 3-12 Vol.-% Ethanol 0-10 mg/L Hopfensäuren enthält, die aus Iso-Alphasäuren, hydrierten Iso-Alphasäuren, Huluponen und Kombinationen davon ausgewählt sind.

9. Verfahren nach einem der vorhergehenden Ansprüche, bei dem der alkoholischen Flüssigkeit vor dem Verpacken Hopfensäuren zugesetzt werden, wobei die Hopfensäuren aus Iso-Alphasäuren, hydrierten Iso-Alphasäuren, Huluponen und Kombinationen davon ausgewählt werden.

10. Verfahren nach einem der vorhergehenden Ansprüche, wobei das flüssige Bierkonzentrat und die alkoholische Flüssigkeit zusammen in einem Gewichtsverhältnis von 7:1 bis 1:1 verpackt werden.

11. Verfahren nach einem der vorangehenden Ansprüche, wobei das flüssige Bierkonzentrat 250-3.000 pg/L Riboflavin enthält.

12. Verfahren nach einem der vorangehenden Ansprüche, wobei die alkoholische Flüssigkeit pro kg Ethanol 50-2.000 mg Ethylacetat enthält.

13. Abgepacktes flüssiges Bierkonzentrat, das durch ein Verfahren nach einem der vorhergehenden Ansprüche erhalten wurde, wobei das abgepackte flüssige Bierkonzentrat eine Einzelportionskapsel mit mindestens zwei Kompartimenten umfasst, einschließlich eines ersten Kompartiments und eines zweiten Kompartiments; wobei das erste Kompartiment das flüssige Bierkonzentrat umfasst, wobei das flüssige Bierkonzentrat einen Ethanolgehalt aufweist, der 1,0 Vol.-% nicht übersteigt, und wobei das zweite Kompartiment die alkoholische Flüssigkeit umfasst.

14. Abgepacktes flüssiges Bierkonzentrat, erhalten durch ein Verfahren nach einem der Ansprüche 1-12, wobei das abgepackte flüssige Bierkonzentrat ein Satz von Teilen ist, umfassend einen ersten Behälter, der 10-1.000 ml des flüssigen Bierkonzentrats enthält, wobei das flüssige Bierkonzentrat einen Ethanolgehalt aufweist, der 1,0 Vol.-% nicht übersteigt, und einen zweiten Behälter, der 4-500 ml der alkoholischen Flüssigkeit enthält.

**Revendications**

1. - Procédé de fabrication d'un concentré de bière liquide conditionné, ledit procédé comprenant :

   • fournir une bière alcoolisée comprenant de l'éthanol à 3 à 12 % ABV (alcool en volume) ;
   • retirer au moins une partie de l'éthanol de la bière alcoolisée au moyen d'une distillation, produisant de cette façon (i) une bière à faible teneur en alcool ayant une teneur en éthanol à 0 - 1,5 % ABV et (ii) un liquide alcoolisé contenant de l'éthanol à au moins 10 % ABV ;
   • retirer au moins 70 % en poids de l'eau présente dans la bière à faible teneur en alcool au moyen d'une séparation membranaire et/ou d'une cryoconcentration pour produire un concentré de bière liquide, la séparation membranaire étant choisie parmi une nanofiltration, une osmose inverse et une osmose directe ;
   • si le liquide alcoolisé contient de l'éthanol à moins de 20 % ABV, concentrer le liquide alcoolisé à une teneur en éthanol à au moins 30 % ABV au moyen d'une distillation, d'une osmose inverse ou d'une osmose directe ;
   • conditionner séparément le concentré de bière liquide et le liquide alcoolisé à l'intérieur d'un seul récipient ou à l'intérieur de récipients séparés qui forment ensemble un kit de pièces.

2. - Procédé selon la revendication 1, dans lequel l'éthanol est retiré de la bière alcoolisée au moyen d'une distillation sous vide à une température de 10 - 100 °C et à une pression de pas plus de 500 mbar.

3. - Procédé selon l'une des revendications 1 ou 2, dans lequel la séparation membranaire est effectuée à l'aide d'une membrane ayant un rejet de glucose de 80 - 100 %, de façon davantage préférée de 90 - 100 % et de la façon que l'on préfère le plus de 95 - 100 % lorsque la mesure est effectuée à l'aide d'une solution aqueuse de glucose à 2000 mg/L à 1,6 MPa, 25°C et 15 % de récupération.

4. - Procédé selon l'une quelconque des revendications précédentes, dans lequel la séparation membranaire est effectuée à l'aide d'une membrane ayant un rejet de chlorure de sodium de 80 - 100 %, de façon davantage préférée de 90 - 100 % et de la façon que l'on préfère le plus de 95 - 100 % lorsque la mesure est effectuée à l'aide d'une solution de chlorure de sodium à 2000 mg/L à 10,3 bar, 25°C, pH 8 et 15 % de récupération.

5. - Procédé selon l'une quelconque des revendications précédentes, dans lequel la séparation membranaire est effectuée à une pression de 6 - 80 bars.

6. - Procédé selon l'une quelconque des revendications précédentes, dans lequel l'eau est retirée de la bière à faible teneur en alcool au moyen d'une osmose inverse.

7. - Procédé selon l'une des revendications 1 ou 2, dans lequel le concentré de bière liquide est obtenu par retrait d'eau à partir de la bière à faible teneur en alcool au moyen d'une cryoconcentration.

8. - Procédé selon l'une quelconque des revendications précédentes, dans lequel la bière alcoolisée comprenant de l'éthanol de 3 - 12 % ABV contient 0 - 10 mg/L d'acides de houblon choisis parmi les acides iso-alpha, les acides iso-alpha hydrogénés, les hulupones et leurs combinaisons.

9. - Procédé selon l'une quelconque des revendications précédentes, dans lequel des acides de houblon sont ajoutés au liquide alcoolisé avant conditionnement, lesdits acides de houblon étant choisis parmi les acides iso-alpha, les acides iso-alpha hydrogénés, les hulupones et leurs combinaisons.

10. - Procédé selon l'une quelconque des revendications précédentes, dans lequel le concentré de bière liquide et le liquide alcoolisé sont conditionnés ensemble dans un rapport pondéral de 7:1 à 1:1.

**11.** - Procédé selon l'une quelconque des revendications précédentes, dans lequel le concentré de bière liquide contient 250 - 3000 µg/L de riboflavine.

**12.** - Procédé selon l'une quelconque des revendications précédentes, dans lequel le liquide alcoolisé contient, par kg d'éthanol, 50 - 2000 mg d'acétate d'éthyle.

**13.** - Concentré de bière liquide conditionné obtenu par un procédé selon l'une quelconque des revendications précédentes, dans lequel le concentré de bière liquide conditionné comprend une capsule à portion unique ayant au moins deux compartiments, comprenant un premier compartiment et un second compartiment ; dans lequel le premier compartiment comprend le concentré de bière liquide, ledit concentré de bière liquide ayant une teneur en éthanol qui ne dépasse pas 1,0 % ABV, et dans lequel le second compartiment comprend le liquide alcoolisé.

**14.** - Concentré de bière liquide conditionné obtenu par un procédé selon l'une quelconque des revendications 1 à 12, dans lequel le concentré de bière liquide conditionné est un kit de pièces comprenant un premier récipient contenant 10 - 1000 mL du concentré de bière liquide, ledit concentré de bière liquide ayant une teneur en éthanol qui ne dépasse pas 1,0 % ABV et un second récipient contenant 4 - 500 mL du liquide alcoolisé.

Fig. 1

Fig. 2

EP 4 150 041 B1

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4265920 A
- WO 2016083482 A
- WO 2018134285 A
- US 2016230133 A
- EP 3330216 A

**Non-patent literature cited in the description**

- **GOLDINER et al.** Alkohol-, Stammwürze- und Korrektionstafel. Institute für Gärungsgewerbe, 1996